# EUROPÄISCHE PATENTANMELDUNG

(11) **EP 3 964 460 A1**
(43) Veröffentlichungstag der Anmeldung: **09.03.2022**
(21) Anmeldenummer: 20195086.2
(22) Anmeldetag: 08.09.2020
(51) Int. Cl.: B65G 47/244, B65G 43/08

(54) **VORRICHTUNG UND VERFAHREN ZUR AUSRICHTUNG VON STÜCKGÜTERN**

(71) Anmelder: Maschinenfabrik Möllers GmbH, 59269 Beckum (DE)
(72) Erfinder: Westphal, Volker, 59269 Beckum (DE)
(74) Vertreter: Grünecker Patent- und Rechtsanwälte PartG mbB

(57) **Zusammenfassung**

Verfahren zur Ausrichtung von Stückgütern (2), wobei ein Stückgut (2) auf zwei parallel nebeneinander angeordneten und das Stückgut (2) gemeinsam tragenden Fördereinrichtungen (4, 6; 16, 18) durch Einschalten einer zeitweisen Geschwindigkeitsdifferenz zwischen den zwei Fördereinrichtungen (4, 6; 16, 18) um eine Vorabdrehung gedreht, nach der Vorabdrehung eine Ausrichtung des Stückguts (2) ohne eine Drehung des Stückguts (2) gemessen wird und die Ausrichtung anhand der Messdaten und durch erneutes Einschalten einer zeitweisen Geschwindigkeitsdifferenz zwischen zwei parallel nebeneinander angeordneten und das Stückgut gemeinsam tragenden Fördereinrichtungen (4, 6; 24, 26) feinjustiert wird wobei um eine möglichst präzise Drehung von Stückgütern bei hoher Förderleistung zu erzielen wird die Feinjustierung in einer Zone (Z3) durchgeführt, die in Förderrichtung hinter einer Zone (Z2) angeordnet ist, in der die Messung der Ausrichtung des Stückguts (2) erfolgt

## Beschreibung

Die vorliegende Erfindung betrifft eine Vorrichtung und ein Verfahren zur Ausrichtung von Stückgütern, insbesondere von mit Schüttgut befüllten Säcken.

In Klappendrehvorrichtungen werden Stückgüter von Klappen, die das Stückgut an gegenüberliegenden Seiten fasst, geklemmt und gedreht. Dabei üben die Klappen eine mechanische Last am Stückgut aus, welche insbesondere bei mit Kunststoffgranulat gefüllten Säcken zu Sackdeformationen führen kann. Eine lokale Höhenvarianz der einzelnen Stückgüter führt in palettierten Stapeln zu unerwünschten Stapelschiefstellungen und Instabilität. Des Weiteren stellen die Klappen der Klappendrehvorrichtung hoch belastete und daher kostenintensive Bauteile dar, die darüber hinaus stark beschleunigende Antriebe und einen damit verbundenen Wartungsaufwand erfordern. Ein signifikanter Energieverbrauch, Vibrationen und Geräuschemissionen der Klappendrehvorrichtung sind als weitere technische Nachteile zu nennen.

Als Alternative zur Klappendrehvorrichtung finden Drehvorrichtungen mit zwei parallel nebeneinander angeordneten Förderbändern, die das Stückgut gemeinsam tragen, Anwendung. Dabei wird während der Beförderung des Stückguts die Geschwindigkeit eines der beiden Förderbänder im Vergleich zu dem anderen Förderband erhöht oder reduziert, sodass die beiden parallelen Förderbänder eine Geschwindigkeitsdifferenz aufweisen. Dies hat eine Drehung des Stückguts zur Folge, da aufgrund der Haftreibung die eine Seite des Stückguts schneller vorangetrieben wird als die andere Seite. Ist die gewünschte Drehposition erreicht, werden die Förderbänder wieder mit der gleichen Geschwindigkeit bewegt. Eine solche Drehvorrichtung ist aus DE 20 2011 110 089 U1 bekannt. Über die Förderbänder dieser Vorrichtung ist ein Lichtvorhang gespannt, der sich parallel zur Förderebene erstreckt und sich aus mehreren quer zur Förderrichtung verlaufenden Lichtstrahlen zusammensetzt. Der Lichtvorhang ermöglicht es eine projizierte Länge des Stückguts in Förderrichtung während der Drehung zu überwachen. Aufgrund der bekannten Maße des Stückguts kann daher auf eine Drehposition bzw. einen Drehwinkel geschlossen werden. Eine Steuereinrichtung der Vorrichtung ist dazu angepasst eingerichtet, die Drehung des Stückguts zu stoppen, d.h. die Geschwindigkeitsdifferenz zwischen den beiden Förderbändern aufzuheben, sobald das Stückgut die gewünschte Drehposition erreicht.

Die Förderbänder sind in der Regel verhältnismäßig lang ausgebildet, damit eine kontinuierliche Überwachung der Drehposition des Stückguts während der Drehung mittels eines über die Förderbänder gespannten Lichtvorhangs möglich ist. Dies hat Auswirkungen auf die Förderleistung, da stets nur ein Stückgut auf den parallelen Förderbändern transportiert wird und sich mit der Länge des Förderbands auch die Verweildauer des Stückguts auf demselben erhöht. Eine Verkürzung der parallelen Förderbänder in obigem Stand der Technik geht andererseits mit einer verringerten Präzision der Drehposition einher.

Eine Aufgabe der vorliegenden Erfindung ist es eine Vorrichtung und ein Verfahren zur Ausrichtung von Stückgütern, insbesondere von mit Schüttgut befüllten Säcken anzugeben, die eine präzise Drehung von Stückgütern bei hoher Förderleistung ermöglichen. Die vorliegende Erfindung nimmt insbesondere die Ausrichtung von Säcken in den Blick, die mit fließfähigem Schüttgut befüllt sind, sodass eine nachträgliche Lagekorrektur innerhalb der Lage eines Stapels üblicherweise nicht möglich oder mit hohem Aufwand verbunden ist.

Zur Lösung des verfahrensmäßigen Aspekts dieser Aufgabe schlägt die vorliegende Erfindung ein Verfahren mit den Merkmalen von Anspruch 1 vor. Als gattungsgemäß für ein solches Verfahren wird die EP 1 180 484 A2 angesehen.

Bei dem erfindungsgemäßen Verfahren wird ein Stückgut auf zwei parallel nebeneinander angeordneten und das Stückgut gemeinsam tragenden Fördereinrichtungen durch Einschalten einer zeitweisen Geschwindigkeitsdifferenz zwischen den zwei Fördereinrichtungen um eine Vorabdrehung gedreht. Die Vorabdrehung entspricht einer Grobausrichtung des Stückguts um einen Drehwinkel von ca. 0°, ±90° oder 180°. Die Grobausrichtung erfolgt in der Regel durch eine parametrisierte Steuerung der parallelen Fördereinrichtungen. Für gewöhnlich wird dabei die Drehposition während der Vorabdrehung nicht überwacht. Dies ermöglicht die Grobausrichtung auf einer kurzen Strecke in Förderrichtung durchzuführen.

Nach der Vorabdrehung wird die Ausrichtung des vorab gedrehten Stückguts ohne Drehung des Stückguts gemessen. Die Messung erfolgt während die parallelen Fördereinrichtungen mit gleicher Geschwindigkeit angetrieben werden; d.h. ohne Drehung des Stückguts. Die Geschwindigkeit kann insbesondere auch Null (die Fördereinrichtungen stehen still) oder negativ (die Fördereinrichtungen bewegen sich entgegen der Förderrichtung) sein. Anschließend wird die Ausrichtung anhand der gemessenen Daten durch erneutes Einschalten einer zeitweisen Geschwindigkeitsdifferenz zwischen zwei parallel nebeneinander angeordneten und das Stückgut gemeinsam tragenden Fördereinrichtungen feinjustiert. Typischerweise beträgt die Winkelposition einer Längsachse des feinjustierten Stückguts 0°, ±90° oder 180° zur Förderrichtung.

Die Feinjustierung wird dabei in einer Zone durchgeführt, die in Förderrichtung hinter einer Zone angeordnet ist, in der die Messung der Ausrichtung des Stückguts erfolgt. Im Gegensatz zu dem aus EP 1 180 484 A2 bekannten Verfahren, werden so die Verfahrensschritte Messen und Feinjustierung auf zwei unterschiedliche Bereiche in Förderrichtung aufgeteilt. Dies erlaubt eine schnellere Taktung, da die jeweiligen Stationen, in denen ein Stückgut gedreht oder gemessen wird, schneller durchlaufen werden können und schneller für ein nachfolgendes Stückgut freigegeben werden, sowie eine präzise Lagebestimmung durch Messen bei nicht drehendem Stückgut.

Nach einer bevorzugten Weiterbildung der vorliegenden Erfindung wird die Messung der Ausrichtung des Stückguts in einer Zone durchgeführt, die in Förderrichtung hinter der Zone angeordnet ist, in der die Vorabdrehung des Stückguts erfolgt. Hierfür kann ein separates Fördermittel für die Grobdrehung vorgesehen sein, welches das vorab gedrehte Stückgut an ein weiteres Fördermittel übergibt, so wie es grundsätzlich aus EP 1 180 484 A2 bekannt ist. Es kann aber auch ein einzelnes Fördermittel mit zwei parallel nebeneinander angeordneten Fördereinrichtungen vorgesehen sein, das in Förderrichtung in mehrere Bereiche unterteilt ist. Vorzugsweise ist das bzw. sind die Fördermittel so ausgestaltet und gesteuert, dass die Ausrichtung des Stückguts nicht in demselben Bereich gemessen wird, in dem es vorab gedreht oder die Ausrichtung feinjustiert wird; d.h. es ist vorzugsweise kein Bereich bzw. kein Fördermittel vorgesehen in dem sowohl das Stückgut gedreht als auch die Ausrichtung des Stückguts gemessen wird.

Nach einer bevorzugten Weiterbildung der vorliegenden Erfindung wird die Feinjustierung des Stückguts und die Vorabdrehung des Stückguts auf unterschiedlichen Fördereinrichtungen durchgeführt, die für sich jedoch identisch ausgebildet sein können. Bevorzugt ist in jeder Zone ein separates Fördermittel angeordnet.

Alternativ kann die Feinjustierung des Stückguts und die Vorabdrehung des Stückguts auf denselben Fördereinrichtungen durchgeführt werden. Hierfür ist in der Regel ein einzelnes Fördermittel mit zwei parallel nebeneinander angeordneten Fördereinrichtungen vorgesehen, die in Förderrichtung in einen Bereich für die Grobausrichtung, einen Bereich für das Messen der Ausrichtung und einen Bereich für die Feinjustierung der Ausrichtung unterteilt sind.

Nach einer bevorzugten Weiterbildung der vorliegenden Erfindung wird die gemessene Ausrichtung des Stückguts nach seiner Vorabdrehung zur Steuerung der zeitweisen Geschwindigkeitsdifferenz bei der Vorabdrehung eines nachfolgend beförderten Stückguts herangezogen. Dies erhöht die Präzision der Grobausrichtung, da die der Vorrichtung vorgelagerten Verpackungs- und Transportprozesse Schwankungen unterliegen, beispielsweise hinsichtlich des Sackfüllgrades oder der Sackposition auf den vorgelagerten Förderstrecken. Diese Schwankungen können mit dieser bevorzugten Weiterbildung ausgeglichen werden.

Zur Lösung des vorrichtungsmäßigen Aspekts der obigen Aufgabe gibt die vorliegende Erfindung eine Vorrichtung zur Ausrichtung von Stückgütern mit den Merkmalen von Anspruch 7 an.

Die Vorrichtung nach diesem Aspekt der Erfindung weist ein erstes Fördermittel mit mindestens zwei parallel nebeneinander angeordneten Fördereinrichtungen auf, die zur Vorabdrehung eines mit den Fördereinrichtungen zu befördernden Stückguts derart ansteuerbar sind, dass sie zeitweise eine Geschwindigkeitsdifferenz aufweisen. Als Fördereinrichtung im Sinne der vorliegenden Erfindung ist insbesondere ein Gurt-, Rollen- oder Kugelbahnförderer anzusehen.

Die Vorrichtung weist des Weiteren ein zweites Fördermittel mit zumindest einer zur Translation des Stückguts angepasst eingerichteten Fördereinrichtung auf, die das Stückgut von dem ersten Fördermittel übernimmt und an ein drittes Fördermittel übergibt, das wiederum mindestens zwei parallel nebeneinander angeordnete Fördereinrichtungen aufweist. Dem zweiten Fördermittel ist ein Sensor zur Bestimmung einer Ausrichtung des Stückguts zugeordnet, die auf dem dritten Fördermittel feinjustiert wird. Hierfür sind die Fördereinrichtungen des dritten Fördermittels anhand von Messdaten des Sensors derart ansteuerbar, dass sie zeitweise eine Geschwindigkeitsdifferenz aufweisen.

Die Grobausrichtung des Stückguts erfolgt parametrisiert und ohne Überwachung einer Winkelposition während der Drehung, sodass das erste Fördermittel mit kurzer Förderstrecke ausgebildet sein kann. Das Stückgut wird erst auf dem zweiten Fördermittel vermessen. Das erste Fördermittel wird daher im Vergleich zu DE 20 2011 110 089 U1 nach kürzerer Zeit wieder frei für ein nachfolgendes Stückgut. So kann eine hohe Taktung bzw. hohe Förderleistung erzielt werden. Gleiches gilt für die Aufteilung der Messung der Ausrichtung und der Feinjustierung des Stückguts auf zwei unterschiedliche Fördermittel. Denn so kann die Verweildauer des Stückguts auf einem einzelnen Fördermittel beispielsweise gegenüber EP 1 180 484 A2 reduziert werden. Dabei wird die Ausrichtung des Stückguts während oder nach der Feinjustierung auf dem dritten Fördermittel üblicherweise nicht gemessen.

Als Alternative und zur Lösung des vorrichtungsmäßigen Aspekts der obigen Aufgabe wird mit der vorliegenden Erfindung eine Vorrichtung mit den Merkmalen von Anspruch 9 vorgeschlagen.

Die Vorrichtung nach diesem Aspekt der Erfindung weist ein einzelnes Fördermittel mit mindestens zwei parallel nebeneinander angeordneten und gemeinsam ein Stückgut tragenden Fördereinrichtungen, die derart ansteuerbar sind, dass sie zeitweise eine Geschwindigkeitsdifferenz aufweisen, um das Stückgut zu drehen, einen Sensor zur Bestimmung einer Ausrichtung des vorab gedrehten Stückguts, und eine die Geschwindigkeitsdifferenz der Fördereinrichtungen steuernde Steuerungseinrichtung auf. Die Steuerungseinrichtung ist dazu angepasst eingerichtet, die zwei Fördereinrichtungen in einem Grobausrichtungsmodus so anzusteuern, dass sie zeitweise eine Geschwindigkeitsdifferenz aufweisen, um das Stückgut um eine Vorabdrehung zu drehen, eine Ausrichtung des vorab gedrehten Stückguts bei gleicher Geschwindigkeit der zwei Fördereinrichtungen durch den Sensor zu messen und die Ausrichtung in einem Feinausrichtungsmodus anhand von Messdaten des Sensors durch erneutes Einschalten einer zeitweisen Geschwindigkeitsdifferenz zwischen den zwei Fördereinrichtungen feinzujustieren. Dabei wird die Ausrichtung des Stückguts während oder nach der Feinjustierung üblicherweise nicht gemessen.

Es können grundsätzlich mehr als zwei Fördereinrichtungen vorgesehen sein, die parallel zueinander angeordnet sind und von denen mindestens eine mit einer steuerbaren Geschwindigkeit antreibbar ist. Wie grundsätzlich aus DE 20 2011 110089 U1 bekannt, ist es von Vorteil, wenn die parallelen Fördereinrichtungen mit einer von Fördereinrichtung zu benachbarter Fördereinrichtung zu- oder abnehmenden Geschwindigkeit antreibbar sind, zweckmäßig so, dass die Geschwindigkeiten proportional zu den gegenseitigen Abständen der Fördereinrichtungen zu- bzw. abnehmen.

Der Sensor zur Messung der Ausrichtung des Stückguts ist in der Regel ein optischer Sensor. Er kann beispielsweise wie der aus DE 20 2011 110 089 U1 bekannte Lichtvorhang, der eine projizierte Länge des Stückguts in Förderrichtung misst, oder wie das aus EP 1 180 484 A2 bekannte Bildverarbeitungssystem, das zumindest einen auf die Förderebene projizierten Teilbereich des Stückguts erfasst, ausgestaltet sein.

Die Vorrichtung nach der vorliegenden Erfindung ist zur Anwendung im Bereich der Verpackungstechnik zur lagenweisen Anordnung von insbesondere rechteckigen Stückgütern auf Paletten vorgesehen. Insbesondere mit Schüttgut befüllte Säcke werden bevorzugt in einem Verband aus mehreren Lagen auf einer Palette angeordnet. Zur Bildung der einzelnen Lagen werden die Säcke in einer ersten Orientierung oder in einer zweiten Orientierung, in der der Gegenstand gegenüber der ersten Orientierung um 90° gedreht ist, oder gegebenenfalls in einer dritten Orientierung, in der der Gegenstand gegenüber der ersten Orientierung um 180° gedreht ist, nebeneinander in einer Ebene angeordnet.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Figur 1: eine schematische Darstellung eines Ausführungsbeispiels in der Draufsicht, und
- Figur 2: eine schematische Darstellung eines anderen Ausführungsbeispiels in der Draufsicht.

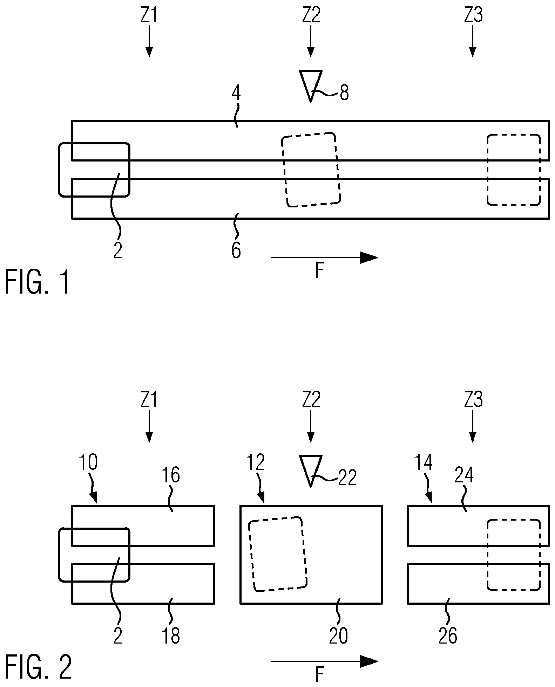

Die Figur 1 zeigt eine Vorrichtung zur Ausrichtung von Stückgütern 2, die vorliegend mit fließfähigem Kunststoffgranulat gefüllte und in der Draufsicht im Wesentlichen rechteckige Säcke sind. Die Vorrichtung umfasst zwei parallel nebeneinander angeordnete Fördereinrichtungen 4, 6, die das Stückgut 2 gemeinsam tragen und in einer Förderrichtung F befördern. Die Fördereinrichtungen 4, 6 sind vorliegend als Gurtförderer ausgebildet.

Eine nicht dargestellte Steuerungseinheit ist steuerungsmäßig mit den Fördereinrichtungen 4, 6 steuerungsmäßig verbunden und derart angepasst eingerichtet, dass die Fördereinrichtungen 4, 6 zeitweise unterschiedlich schnell angetrieben werden können. In einer ersten Zone Z1 in Förderrichtung F wird die Haftreibung zwischen dem Stückgut 2 und den Fördereinrichtungen 4, 6 ausgenutzt, um es durch unterschiedliche Fördergeschwindigkeiten der Fördereinrichtungen 4, 6 um eine Vorabdrehung zu drehen. In einer zweiten Zone Z2, die der ersten Zone Z1 in Förderrichtung F nachgelagert ist, ist ein optischer Sensor 8 zur Erfassung der Ausrichtung des Stückguts 2, insbesondere der Winkelposition einer Längsachse des Stückguts 2 relativ zur Förderrichtung F, angeordnet. Die Ausrichtung des Stückguts 2 wird in einer dritten Zone Z3 anhand von Messdaten des Sensors 8 feinjustiert, indem die Steuerungseinheit die Fördereinrichtungen 4, 6 erneut zeitweise mit unterschiedlicher Fördergeschwindigkeit antreibt. Die dritte Zone Z3 ist wiederum der zweiten Zone Z2 in Förderrichtung nachgelagert.

Die Winkelpositionen der Längsachse des Stückguts 2 relativ zur Förderrichtung F beträgt nach der Feinjustierung in der Regel 0°, ±90° oder 180°. Vorliegend ist in Figur 1 eine Winkelposition von +90° nach der Feinjustierung in der dritten Zone Z3 dargestellt.

Die Figur 2 zeigte eine Vorrichtung zur Ausrichtung von Stückgütern 2, die wie voranstehend angegeben ausgestaltet sind. Die Vorrichtung weist ein erstes Fördermittel 10, ein zweites Fördermittel 12 und ein drittes Fördermittel 14 auf, die in Förderrichtung F hintereinander angeordnet sind. Das erste Fördermittel 10 weist zwei parallel nebeneinander angeordnete Fördereinrichtungen 16, 18 auf, die vorliegend als Gurtförderer ausgebildet sind und von einer nicht dargestellten Steuerungseinheit zeitweise unterschiedlich schnell angetrieben werden können, um das Stückgut 2 um eine Vorabdrehung zu drehen. Das in einer ersten Zone Z1 in Förderrichtung angeordnete erste Fördermittel 10 übergibt danach das vorab gedrehte Stückgut 2 an das zweite Fördermittel 12, das in einer zweiten Zone Z2 in Förderrichtung vorgesehen ist.

Das zweite Fördermittel 12 ist dazu angepasst eingerichtet, das vorab gedrehte Stückgut 2 ohne Drehung an das in einer dritten Zone Z3 in Förderrichtung angeordnete dritte Fördermittel 14 zu übergeben. Es weist hierfür einen einzelnen Gurtförderer 20 auf. Die dritte Zone Z3 ist entsprechend der zweiten Zone Z2 in Förderrichtung nachgelagert. Ein optischer Sensor 22 zur Erfassung der Ausrichtung des vorab gedrehten Stückguts 2 ist dem zweiten Fördermittel 12 zugeordnet. Auf Basis der von dem Sensor 22 gemessenen Daten werden parallel nebeneinander angeordnete und als Gurtförderer ausgebildete Fördereinrichtungen 24, 26 des dritten Fördermittels 14 von einer Steuerungseinheit zeitweise unterschiedlich schnell angetrieben, um die Ausrichtung des Stückguts 2 feinzujustieren.

Das Wesen der beiden Ausführungsbeispiele liegt darin, dass das Stückgut in der ersten und der dritten Zone gedreht und nicht gemessen wird und dass das Stückgut in der zweiten Zone gemessen und nicht gedreht wird. Die Anzahl der hierfür vorgesehenen Fördermittel unterliegt grundsätzlich keiner Einschränkung.

### Bezugszeichenliste

- 2: Stückgut
- 4,6: Fördereinrichtung
- 8: optischer Sensor
- 10: erstes Fördermittel
- 12: zweites Fördermittel
- 14: drittes Fördermittel
- 16, 18: Fördereinrichtung
- 20: Gurtförderer
- 22: optischer Sensor
- 24, 26: Fördereinrichtung
- F: Förderrichtung
- Z1: erste Zone
- Z2: zweite Zone
- Z3: dritte Zone

## Patentansprüche

1. Verfahren zur Ausrichtung von Stückgütern (2), insbesondere von mit Schüttgut befüllten Säcken, wobei ein Stückgut (2) auf zwei parallel nebeneinander angeordneten und das Stückgut (2) gemeinsam tragenden Fördereinrichtungen (4, 6; 16, 18) durch Einschalten einer zeitweisen Geschwindigkeitsdifferenz zwischen den zwei Fördereinrichtungen (4, 6; 16, 18) um eine Vorabdrehung gedreht, nach der Vorabdrehung eine Ausrichtung des Stückguts (2) ohne eine Drehung des Stückguts (2) gemessen wird und die Ausrichtung anhand der Messdaten und durch erneutes Einschalten einer zeitweisen Geschwindigkeitsdifferenz zwischen zwei parallel nebeneinander angeordneten und das Stückgut gemeinsam tragenden Fördereinrichtungen (4, 6; 24, 26) feinjustiert wird, **dadurch gekennzeichnet, dass** die Feinjustierung in einer Zone (Z3) durchgeführt wird, die in Förderrichtung hinter einer Zone (Z2) angeordnet ist, in der die Messung der Ausrichtung des Stückguts (2) erfolgt.

2. Verfahren nach Anspruch 1, **dadurch gekennzeichnet, dass** die Messung der Ausrichtung des Stückguts (2) in einer Zone (Z2) durchgeführt wird, die in Förderrichtung hinter der Zone (Z1) angeordnet ist, in der die Vorabdrehung des Stückguts (2) erfolgt.

3. Verfahren nach Anspruch 1 oder 2, **dadurch gekennzeichnet, dass** die Feinjustierung des Stückguts (2) und die Vorabdrehung des Stückguts (2) auf denselben Fördereinrichtungen (4, 6) durchgeführt wird.

4. Verfahren nach Anspruch 1 oder 2, **dadurch gekennzeichnet, dass** die Feinjustierung des Stückguts (2) und die Vorabdrehung des Stückguts (2) auf unterschiedlichen Fördereinrichtungen durchgeführt wird.

5. Verfahren nach einem der vorherigen Ansprüche, **dadurch gekennzeichnet, dass** die gemessene Ausrichtung des Stückguts (2) nach seiner Vorabdrehung zur Steuerung der zeitweisen Geschwindigkeitsdifferenz bei der Vorabdrehung der Ausrichtung eines nachfolgend beförderten Stückguts (2) herangezogen wird.

6. Verfahren nach einem der vorherigen Ansprüche, **dadurch gekennzeichnet, dass** die Stückgüter (2) mit Kunststoffgranulat gefüllte Säcke sind.

7. Vorrichtung zur Ausrichtung von Stückgütern (2), insbesondere von mit Schüttgut befüllten Säcken, aufweisend
ein erstes Fördermittel (10) mit zumindest zwei parallel nebeneinander angeordneten Fördereinrichtungen (16, 18), die zum Vorabdrehen eines mit den Fördereinrichtungen (16, 18) zu befördernden Stückguts (2) derart ansteuerbar sind, dass sie zeitweise eine Geschwindigkeitsdifferenz aufweisen,
**gekennzeichnet durch**
ein zweites, dem ersten Fördermittel (10) in Förderrichtung nachgelagertes Fördermittel (12) mit zumindest einer Fördereinrichtung (20), die zur Translation des vorab gedrehten Stückguts (2) zu einem dritten Fördermittel (14) angepasst ausgebildet ist,
einen dem zweiten Fördermittel (12) zugeordneten Sensor (22) zur Messung einer Ausrichtung des vorab gedrehten Stückguts (2), und
das dritte Fördermittel (14), das dem zweiten Fördermittel (12) in Förderrichtung nachgelagert ist und zumindest zwei parallel nebeneinander angeordnete und das vorab gedrehte Stückgut gemeinsam tragende Fördereinrichtungen (24, 26) aufweist, die zur Feinjustierung der Ausrichtung anhand von Messdaten des Sensors (22) derart ansteuerbar sind, dass sie zeitweise eine Geschwindigkeitsdifferenz aufweisen.

8. Vorrichtung nach Anspruch 7, **dadurch gekennzeichnet, dass** die Fördereinrichtungen (16, 18, 20, 24, 26) des ersten, des zweiten und des dritten Fördermittels (10, 12, 14) in Förderrichtung jeweils nicht länger als 2000 mm sind.

9. Vorrichtung zur Ausrichtung von Stückgütern (2), insbesondere von mit Schüttgut befüllten Säcken, aufweisend
zumindest zwei parallel nebeneinander angeordnete Fördereinrichtungen (4, 6), die zeitweise mit unterschiedlicher Geschwindigkeit antreibbar sind, um ein auf den Fördereinrichtungen (4, 6) zu beförderndes Stückgut (2) zu drehen,
einen Sensor (8) zur Messung einer Ausrichtung des gedrehten Stückguts (2), und
eine die Antriebsgeschwindigkeit der Fördereinrichtungen (4, 6) steuernde Steuerungseinrichtung,
**dadurch gekennzeichnet, dass** die Steuerungseinrichtung dazu angepasst eingerichtet ist,
die Fördereinrichtungen (4, 6) in einem Grobausrichtungsmodus so anzusteuern, dass sie zeitweise eine Geschwindigkeitsdifferenz aufweisen, um das Stückgut (2) um eine Vorabdrehung zu drehen, eine Ausrichtung des vorab gedrehten Stückguts (2) bei gleicher Geschwindigkeit der Fördereinrichtungen mit dem Sensor (8) zu messen und die Ausrichtung in einem Feinausrichtungsmodus anhand von Messdaten des Sensors (8) durch erneutes Einschalten einer zeitweisen Geschwindigkeitsdifferenz zwischen den Fördereinrichtungen (4, 6) feinzujustieren.
